# EUROPEAN PATENT SPECIFICATION

(11) **EP 4 482 630 B1**
(45) Date of publication and mention of the grant of the patent: **01.04.2026**
(21) Application number: 23712578.6
(22) Date of filing: 23.02.2023
(51) Int. Cl.: B21F 27/16, B65G 47/84, B68G 9/00, B65G 15/14, B65G 29/00

(54) **SPRING TRANSFER APPARATUS AND METHOD**
FEDERTRANSFERVORRICHTUNG UND -VERFAHREN
APPAREIL ET PROCÉDÉ DE TRANSFERT DE RESSORT

(30) Priority: 23.02.2022 GB 202202486
(43) Date of publication of application: 01.01.2025
(73) Proprietor: HS Products Limited, Leeds West Yorkshire LS11 5BP (GB)
(72) Inventor: CLARE, David, Leeds West Yorkshire LS11 5BP (GB)
(74) Representative: Mohun, Stephen John
(86) International application number: PCT/GB2023/050418
(87) International publication number: WO 2023/161643

(56) References cited:
- EP-A1- 0 421 495
- EP-B1- 1 068 147
- EP-B1- 3 670 020
- WO-A1-02/38304
- US-B2- 8 393 131

## Description

The present invention relates to an apparatus and method for transferring springs in the manufacture of pocketed spring units.

WO 02/38304 A1, which forms the basis for the preamble of claims 1 and 8, describes a method and apparatus for transporting springs for mattresses and upholstery, in which a transport wheel takes springs from a spring coiler to a conveyor belt. The springs are clamped axially between ring shaped guide plates whilst on the wheel.

US 8 393 131 B2 describes a device for the assembly of pocket spring strings in which an operator manually inserts springs into receptacles arranged around a periphery of a drum, which he then rotates.

The present invention is defined in the attached independent claims, to which reference should now be made. Further, preferred features may be found in the sub-claims appended thereto.

According to one aspect of the present invention, there is provided transfer apparatus for transferring springs from a spring forming station, at which springs are formed from a length of wire, to a pocketing station, at which the springs are encased in pocketing material, in the manufacture of a pocketed spring unit, the transfer apparatus comprising a conveyor having spaced-apart belts configured to move together between the spring forming station and the pocketing station, and a placement member for introducing the springs onto the conveyor, wherein the placement member includes at least one spring chamber for temporarily retaining a spring, and is arranged to rotate about a rotation axis, and wherein the placement member is positioned with respect to the conveyor so that during rotation of the placement member the, or each, spring chamber passes at least partly between the moving belts and the spring is captured by the belts.

Preferably, the rotation axis is substantially parallel with an axis of the spring.

The apparatus may comprise a compression portion arranged to compress the spring axially prior to capture of the spring by the belts. In a preferred arrangement, the compression portion comprises a pair of spaced compression members between which the spring is arranged to pass as the placement member rotates. The compression members may be arranged to converge in the direction of movement of the spring and preferably comprise a pair of plates.

The transfer apparatus comprises a magnetic base beneath the placement member. The magnetic base may be arranged in use to retain the spring such that the spring axis is substantially parallel with the rotation axis of the placement member.

The magnetic base may be placed proximate to the spring forming station in use, optionally so that the spring comes under the magnetic influence of the base prior to being cut from the length of wire.

The placement member comprises a plurality of spring chambers spaced around a substantially circular path traced by the chambers during rotation of the placement member. The chambers each comprise a channel extending substantially parallel with the rotation axis and is substantially open at each end. The channel may be defined by channel edge/spoke portions of the placement member.

In a particularly preferred arrangement, the placement member is substantially circular in plan and preferably substantially cylindrical in shape, with the or each spring chamber located around a circumferential outer edge of the placement member.

According to another aspect of the present invention, there is provided a method of conveying springs from a spring forming station, at which springs are formed from a length of wire, to a pocketing station, at which the springs are encased in pocketing material, in the manufacture of a pocketed spring unit, the method comprising temporarily retaining the springs in spring chambers on a placement member and causing the placement member to rotate so that the spring chambers each pass at least partly between moving conveyor belts causing the springs to be captured by the belts.

In a further aspect, not forming part of the claimed invention, the present disclosure provides a computer programme product on a computer readable medium, comprising instructions that, when executed by a computer, cause the computer to perform a method of conveying springs from a spring forming station, at which springs are formed from a length of wire, to a pocketing station, at which the springs are encased in pocketing material, in the manufacture of a pocketed spring unit, the method comprising temporarily retaining the springs in spring chambers on a placement member and causing the placement member to rotate so that the spring chambers each pass at least partly between moving conveyor belts causing the springs to be captured by the belts.

The disclosure also comprises a program for causing a device to perform a method of conveying springs from a spring forming station, at which springs are formed from a length of wire, to a pocketing station, at which the springs are encased in pocketing material, in the manufacture of a pocketed spring unit, the method comprising temporarily retaining the springs in spring chambers on a placement member and causing the placement member to rotate so that the spring chambers each pass at least partly between moving conveyor belts causing the springs to be captured by the belts.

A preferred embodiment of the present invention will now be described, by way of example only, with reference to the accompanying diagrammatic drawings, in which:

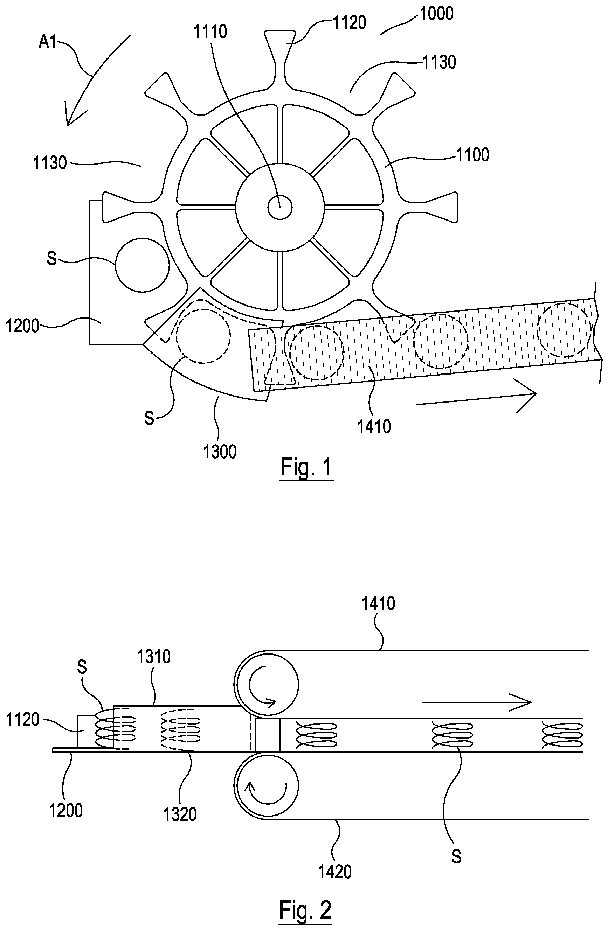

Figure 1 shows, in plan schematic view, a spring transfer apparatus according to an embodiment of the present invention; and
Figure 2 shows the apparatus of Figure 1 in schematic side view.

Turning to the drawings, these show a spring transfer apparatus, generally at 1000. The apparatus comprises a wheel-like placement member 1100 which, in use, is driven to rotate in the direction of Arrow A1 about a central hub 1110 by a motor (not shown). The placement wheel 1100 has a plurality of circumferentially spaced spoke portions 1120 defining therebetween a series of spring chambers 1130.

A magnetic base plate 1200 is arranged beneath the wheel 1100 and is arranged to receive a coil spring S which is deposited by a spring forming apparatus (not shown) of a known type, located above the plate 1200.

As the wheel rotates, the spring is urged by the spokes 1120 along the magnetic base plate 1200 towards an arcuate compression stage 1300, comprising a pair of plates 1310 and 1320 that are axially spaced above and below the spring. The plates initially converge in a chamfer in the direction of rotation of the wheel 1100 causing the springs to become partly axially compressed as they transit between the plates.

As the springs exit the plates, they are urged by the spokes into positions between a pair of superposed driven endless belts 1410 and 1420 between which the springs are further compressed and then conveyed to a pocketing station (not shown) where they are inserted into pockets for incorporation into a resilient spring unit, such as for use in a mattress core. The belts are optionally castellated to maintain a good grip of the springs.

The rotating placement member need not stop and can instead operate continuously, inserting springs into position between the belts. The magnetic base plate helps to ensure that the springs remain firmly in the spring chambers between the spokes after they are delivered by the spring forming head. The invention allows for a much greater rate of transfer of springs from the spring forming head to the pocketing station, in the production of pocketed spring units such as are used as core components for mattresses.

## Claims

1. A transfer apparatus for transferring springs from a spring forming station, at which springs are formed from a length of wire, to a pocketing station, at which the springs are encased in pocketing material, in the manufacture of a pocketed spring unit, the transfer apparatus comprising a conveyor having spaced-apart belts (1410, 1420) configured to move together between the spring forming station and the pocketing station, and a placement member (1100) for introducing the springs onto the conveyor, wherein the placement member includes a plurality of spring chambers (1130) for temporarily retaining a spring, and is arranged to rotate about a rotation axis, and wherein the placement member is positioned with respect to the conveyor so that during rotation of the placement member the spring chambers each pass at least partly between the moving belts and the spring is captured by the belts, the spring chambers are spaced around a substantially circular path traced by the chambers during rotation of the placement member and the chambers each comprise a channel extending substantially parallel with the rotation axis, which channel is substantially open at each end, **characterised in that** the transfer apparatus comprises a magnetic base (1200) beneath the placement member.

2. An apparatus according to Claim 1, wherein the rotation axis is substantially parallel with an axis of the spring.

3. An apparatus according to Claim 1 or 2, wherein the apparatus further comprises a compression portion arranged to compress the spring axially prior to capture of the spring by the belts.

4. An apparatus according to Claim 3, wherein the compression portion comprises a pair of spaced compression members between which the spring is arranged to pass as the placement member rotates.

5. An apparatus according to Claim 4, wherein the compression members comprise a pair of plates and are arranged to converge in the direction of movement of the spring.

6. Apparatus according to any of the preceding claims, , wherein the magnetic base is arranged in use to retain the spring such that the spring axis is substantially parallel with the rotation axis of the placement member.

7. Apparatus according to any of the preceding claims, , wherein the channel is defined by channel edge/spoke portions of the placement member.

8. A method of conveying springs from a spring forming station, at which springs are formed from a length of wire, to a pocketing station, at which the springs are encased in pocketing material, in the manufacture of a pocketed spring unit, the method comprising temporarily retaining the springs in spring chambers (1130) on a placement member (1100) and causing the placement member to rotate so that the spring chambers each pass at least partly between moving conveyor belts (1410, 1420) causing the springs to be captured by the belts, the spring chambers are spaced around a substantially circular path traced by the chambers during rotation of the placement member and the chambers each comprise a channel extending substantially parallel with the rotation axis, which channel is substantially open at each end, **characterised in that** the transfer apparatus comprises a magnetic base (1200) beneath the placement member.

## Patentansprüche

1. Transfervorrichtung zum Transferieren von Federn von einer Federformstation, in der Federn aus einer Drahtlänge geformt werden, zu einer Taschenstation, in der die Federn in Taschenmaterial eingehüllt werden, bei der Herstellung einer Taschenfedereinheit, wobei die Transfervorrichtung einen Förderer mit beabstandeten Bändern (1410, 1420), die dazu konfiguriert sind, sich zusammen zwischen der Federformstation und der Taschenstation zu bewegen, und ein Platzierungselement (1100) zum Einführen der Federn auf den Förderer umfasst, wobei das Platzierungselement eine Vielzahl von Federkammern (1130) zum vorübergehenden Halten einer Feder beinhaltet und dazu angeordnet ist, sich um eine Drehachse zu drehen, und wobei das Platzierungselement in Bezug auf den Förderer so positioniert ist, dass während einer Drehung des Platzierungselements die Federkammern jeweils mindestens teilweise zwischen den sich bewegenden Bändern durchgehen und die Feder von den Bändern erfasst wird,
die Federkammern um einen im Wesentlichen kreisförmigen Weg herum beabstandet sind, der von den Kammern während der Drehung des Platzierungselements verfolgt wird, und die Kammern jeweils einen Kanal umfassen, der sich im Wesentlichen parallel zu der Drehachse erstreckt, wobei der Kanal an jedem Ende im Wesentlichen offen ist,
**dadurch gekennzeichnet, dass** die Transfervorrichtung eine magnetische Basis (1200) unterhalb des Platzierungselements umfasst.

2. Vorrichtung nach Anspruch 1, wobei die Drehachse im Wesentlichen parallel zu einer Achse der Feder ist.

3. Vorrichtung nach Anspruch 1 oder 2, wobei die Vorrichtung ferner einen Kompressionsabschnitt umfasst, der dazu angeordnet ist, die Feder axial, vor dem Erfassen der Feder durch die Bänder, zu komprimieren.

4. Vorrichtung nach Anspruch 3, wobei der Komprimierungsabschnitt ein Paar beabstandeter Komprimierungselemente umfasst, zwischen denen die Feder angeordnet ist, um durchzugehen, da sich das Platzierungselement dreht.

5. Vorrichtung nach Anspruch 4, wobei die Kompressionselemente ein Paar von Platten umfassen und dazu angeordnet sind, in der Bewegungsrichtung der Feder zu konvergieren.

6. Vorrichtung nach einem der vorhergehenden Ansprüche, wobei die magnetische Basis bei Verwendung dazu angeordnet ist, die Feder so zu halten, dass die Federachse im Wesentlichen parallel zu der Drehachse des Platzierungselements ist.

7. Vorrichtung nach einem der vorhergehenden Ansprüche, wobei der Kanal durch Kanalrand-/-speichenabschnitte des Platzierungselements definiert ist.

8. Verfahren zum Befördern von Federn von einer Federformstation, in der Federn aus einer Drahtlänge geformt werden, zu einer Taschenstation, in der die Federn in Taschenmaterial eingehüllt werden, bei der Herstellung einer Taschenfedereinheit, wobei das Verfahren das vorübergehende Halten der Federn in Federkammern (1130) auf einem Platzierungselement (1100) und das Bewirken dessen, dass sich das Platzierungselement dreht, umfasst, sodass die Federkammern jeweils mindestens teilweise zwischen sich bewegenden Förderbändern (1410, 1420) durchgehen, wodurch bewirkt wird, dass die Federn von den Bändern erfasst werden,
die Federkammern um einen im Wesentlichen kreisförmigen Weg herum beabstandet sind, der von den Kammern während der Drehung des Platzierungselements verfolgt wird, und die Kammern jeweils einen Kanal umfassen, der sich im Wesentlichen parallel zu der Drehachse erstreckt, wobei der Kanal an jedem Ende im Wesentlichen offen ist,
**dadurch gekennzeichnet, dass** die Transfervorrichtung eine magnetische Basis (1200) unterhalb des Platzierungselements umfasst.

## Revendications

1. Appareil de transfert destiné à transférer des ressorts, à partir d'un poste de formation de ressorts, au niveau duquel des ressorts sont formés à partir d'une longueur de fil, vers un poste d'ensachement, au niveau duquel les ressorts sont enfermés dans un matériau d'ensachement, dans le cadre de la fabrication d'une unité de ressorts ensachés, l'appareil de transfert comprenant un convoyeur présentant des courroies espacées (1410, 1420) conçues pour se déplacer ensemble entre le poste de formation de ressort et le poste d'ensachement, et un élément de placement (1100) destiné à introduire les ressorts sur le convoyeur, dans lequel l'élément de placement comprend une pluralité de chambres à ressort (1130) destinées à retenir temporairement un ressort, et est agencé pour tourner autour d'un axe de rotation, et dans lequel l'élément de placement est positionné par rapport au convoyeur afin que, pendant la rotation de l'élément de placement, les chambres à ressort passent chacune au moins partiellement entre les courroies mobiles et le ressort soit capturé par les courroies,
les chambres à ressort sont espacées autour d'un trajet sensiblement circulaire tracé par les chambres pendant la rotation de l'élément de placement et les chambres comprennent chacune un canal s'étendant sensiblement parallèlement à l'axe de rotation, lequel canal est sensiblement ouvert à chaque extrémité,
**caractérisé en ce que** l'appareil de transfert comprend une base magnétique (1200) en dessous de l'élément de placement.

2. Appareil selon la revendication 1, dans lequel l'axe de rotation est sensiblement parallèle à un axe du ressort.

3. Appareil selon la revendication 1 ou 2, dans lequel l'appareil comprend en outre une partie de compression agencée pour comprimer le ressort axialement avant la capture du ressort par les courroies.

4. Appareil selon la revendication 3, dans lequel la partie de compression comprend une paire d'éléments de compression espacés entre lesquels le ressort est agencé pour passer tandis que l'élément de placement tourne.

5. Appareil selon la revendication 4, dans lequel les éléments de compression comprennent une paire de plaques et sont agencés pour converger dans la direction de déplacement du ressort.

6. Appareil selon l'une quelconque des revendications précédentes, dans lequel la base magnétique est agencée lors de l'utilisation pour retenir le ressort de sorte que l'axe du ressort soit sensiblement parallèle à l'axe de rotation de l'élément de placement.

7. Appareil selon l'une quelconque des revendications précédentes, dans lequel le canal est défini par des parties de bord/ailette de canal de l'élément de placement.

8. Procédé de transport de ressorts à partir d'un poste de formation de ressorts, au niveau duquel des ressorts sont formés à partir d'une longueur de fil, vers un poste d'ensachement, au niveau duquel les ressorts sont enfermés dans un matériau d'ensachement, dans le cadre de la fabrication d'une unité de ressorts ensachés, le procédé comprenant la retenue temporaire des ressorts dans des chambres à ressorts (1130) sur un élément de placement (1100) et le fait d'amener la rotation de l'élément de placement afin que les chambres à ressorts passent chacune au moins partiellement entre des courroies mobiles (1410, 1420) de convoyeur, ce qui amène la capture des ressorts par les courroies,
les chambres à ressort sont espacées autour d'un trajet sensiblement circulaire tracé par les chambres pendant la rotation de l'élément de placement et les chambres comprennent chacune un canal s'étendant sensiblement parallèlement à l'axe de rotation, lequel canal est sensiblement ouvert à chaque extrémité,
**caractérisé en ce que** l'appareil de transfert comprend une base magnétique (1200) en dessous de l'élément de placement.
